(19) Europäisches Patentamt
European Patent Office
Office européen des brevets

(11) EP 2 735 885 A1

(12) EUROPEAN PATENT APPLICATION

(43) Date of publication:
28.05.2014 Bulletin 2014/22

(51) Int Cl.:
G01S 13/34 (2006.01)          G01S 7/35 (2006.01)
G01S 13/32 (2006.01)          G01S 13/28 (2006.01)
G01S 7/292 (2006.01)

(21) Application number: 13185761.7

(22) Date of filing: 24.09.2013

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 26.11.2012 JP 2012257945

(71) Applicant: FUJITSU LIMITED
Kawasaki-shi,
Kanagawa 211-8588 (JP)

(72) Inventor: Shirakawa, Kazuo
Kawasaki-shi, Kanagawa 211-8588 (JP)

(74) Representative: Ward, James Norman
Haseltine Lake LLP
Lincoln House, 5th Floor
300 High Holborn
London WC1V 7JH (GB)

(54) **Detecting and ranging apparatus and method for identifying interference signal**

(57)    A parameter changer (116) changes the parameter of the complementary code input from a multiplexer (102). A separator (117) separates the time-multiplexed complementary code of which parameter has been changed into the code sequences at the even numbers of the time slots and the code sequences at the odd numbers of the time slots. A demodulator (118) demodulates the received signals using the parameter-changed complementary code in order to obtain the demodulated signal. An interference identifying unit (122) identifies the interference signal included in the received signals using the demodulated signal from the demodulator (118).

FIG.3

**Description**

Field

The embodiments discussed herein are related to a detecting and ranging apparatus and a method for identifying an interference signal.

Background

Some radar apparatuses that are a type of detecting and ranging apparatus transmit a probe signal generated using a complementary code to a detection area. Herein, the complementary code is formed from a pair of code sequences. Adding the result from the autocorrelation operation of one of the code sequences to the result from the autocorrelation operation of the other of the code sequences after aligning the delay times obtains a zero side lobe. Thus, it is recognized that a radar apparatus that uses a complementary code can accurately detect an object.

Related-art examples are described, for example, in Japanese Laid-open Patent Publication No. 2008-020221, Japanese Laid-open Patent Publication No. 06-160519, Japanese Laid-open Patent Publication No. 2000-321351, Japanese Laid-open Patent Publication No. 2000-009833 and Japanese Laid-open Patent Publication No. 2002-014159.

On the other hand, when a complementary code is applied to a radar apparatus, there is a limit on the number of complementary codes to be selected. Thus, interference sometimes occurs in a plurality of radar apparatus.

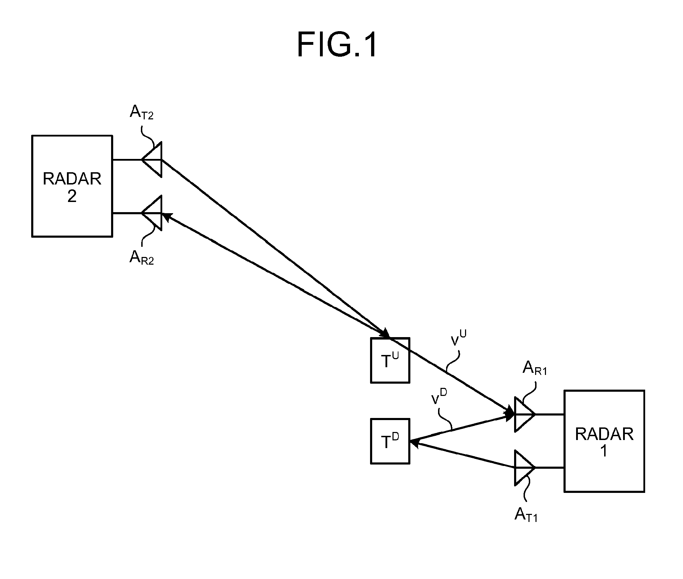

FIG. 1 illustrates an example of the occurrence of interference between radar apparatuses. In FIG. 1, a radar 1 and a radar 2 transmit probe signals generated using complementary codes from transmitting antennas $A_{T1}$ and $A_{T2}$, respectively.

While the radar 1 detects an object $T^D$, the radar 2 detects an object $T^U$. Thus, the radar 1 receives a probe signal reflected by the object $T^D$ or, namely, a desired signal $v^D$ with a receiving antenna $A_{R1}$. Meanwhile, the radar 2 receives a probe signal reflected by the object $T^U$ with a receiving antenna $A_{R2}$. The probe signal from the radar 2 is sometimes received at the receiving antenna $A_{R1}$ of the radar 1 as an interference signal $v^U$ when being reflected by the object $T^U$ while the radar 1 detects the object $T^D$. At that case, the signals received by the radar 1 include the interference signal $v^U$ in addition to the desired signal $v^D$. In other words, the received signals v of the radar 1 are represented by an expression (1). The n(t) denotes a noise.

$$v(t) = v^D(t) + v^U(t) + n(t) \qquad (1)$$

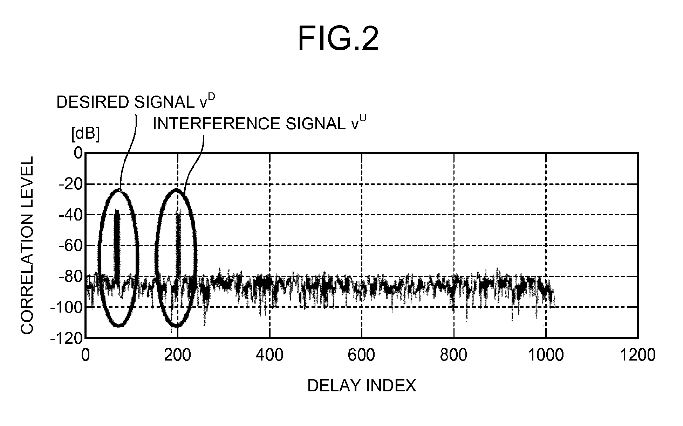

Hereinafter, an exemplary result from the correlation operation when an interference signal is included in the received signals will be described with reference to FIG. 2. FIG. 2 illustrates an exemplary result from the correlation operation in a case A of the following cases A and B.

<Case A> When the radar 1 and the radar 2 use the same complementary code, two correlation peaks, the correlation peak of the desired signal $v^D$ and the correlation peak of the interference signal $v^U$, appear in the result from the autocorrelation operation of the received signals v at the radar 1 as illustrated in FIG. 2. Thus, it is difficult for the radar 1 in the case A to distinguish which correlation peak shows the desired signal.

<Case B> It is assumed that the radar 1 and the radar 2 use the same complementary code and there is not an object $T^D$ and there is an object $T^U$. In that case, there is not a desired signal $v^D$. Thus, only the correlation peak of the interference signal $v^U$ of the two correlation peaks illustrated in FIG. 2 appears in the result from the autocorrelation operation of the received signals v at the radar 1. However, it is difficult for the radar 1 to distinguish whether the correlation peak is the correlation peak of the desired signal or the correlation peak of the interference signal. Thus, the radar 1 mistakenly recognizes the correlation peak of the interference signal as the correlation peak of the desired signal in the case B.

Thus, it is difficult for the radar 1 to detect the object $T^D$ in both of the cases A and B.

Accordingly, it is an object in one aspect of an embodiment of the invention to identify an interference signal included in the received signals with a detecting and ranging apparatus using a complementary code.

Summary

According to an aspect of an embodiment, a detecting and ranging apparatus includes a transmitter that transmits, to a detection region, a probe signal generated using a first complementary code formed from a first pair of code sequences as a probe signal generating code, a first demodulator that demodulates a received signal using the first complementary code to obtain a first demodulated signal, a second demodulator that demodulates the received signal using a second complementary code formed from a second pair of code sequences in which an order, polarity or phase or any combination thereof of the first pair of code sequences is changed to obtain a second demodulated signal, and an identifying unit that identifies an interference signal included in the received signals using the second demodulated signal.

Brief Description of Drawings

FIG. 1 is a view of an example of the occurrence of interference between radar apparatuses;
FIG. 2 is a view of an exemplary result from the correlation operation when an interference signal is included in the received signals;
FIG. 3 is a functional block diagram for illustrating an example of the radar apparatus according to a first embodiment;
FIG. 4 is a view of the result from the correlation operation of complementary codes;
FIG. 5 is a view of an exemplary time multiplexing in the first embodiment;
FIG. 6 is a view of an exemplary result from the correlation operation in the first embodiment;
FIG. 7 is a view of an exemplary interference signal in the first embodiment;
FIG. 8 is a view of an exemplary desired signal in the first embodiment;
FIG. 9 is a functional block diagram for illustrating an example of the radar apparatus according to a second embodiment;
FIG. 10 is a functional block diagram for illustrating an example of the radar apparatus according to a third embodiment;
FIG. 11 is a view of an exemplary interference signal in the third embodiment;
FIG. 12 is a functional block diagram for illustrating an example of the radar apparatus according to a fourth embodiment;
FIG. 13 is a flowchart for describing an operation of the radar apparatus in the fourth embodiment;
FIG. 14 is a view of an exemplary result from the correlation operation when an interference signal is included in the received signals;
FIG. 15 is a functional block diagram for illustrating an example of the radar apparatus according to a fifth embodiment;
FIG. 16 is a functional block diagram for illustrating an example of the radar apparatus according to a sixth embodiment; and
FIG. 17 is a view of an exemplary hardware configuration of a radar apparatus.

Description of Embodiments

Preferred embodiments of the present invention will be explained with reference to accompanying drawings. Note that the detecting and ranging apparatus and the method for identifying an interference signal disclosed herein are not limited to the embodiments to be described below. Further, the components having the same function and the steps in which the same process is performed in the embodiments will be denoted with the same reference signs. The overlapping descriptions will be omitted.
Further, a radar apparatus will be described as an example of the detecting and ranging apparatus disclosed herein in each of the embodiments to be described below.

[a] First Embodiment

Configuration of radar apparatus

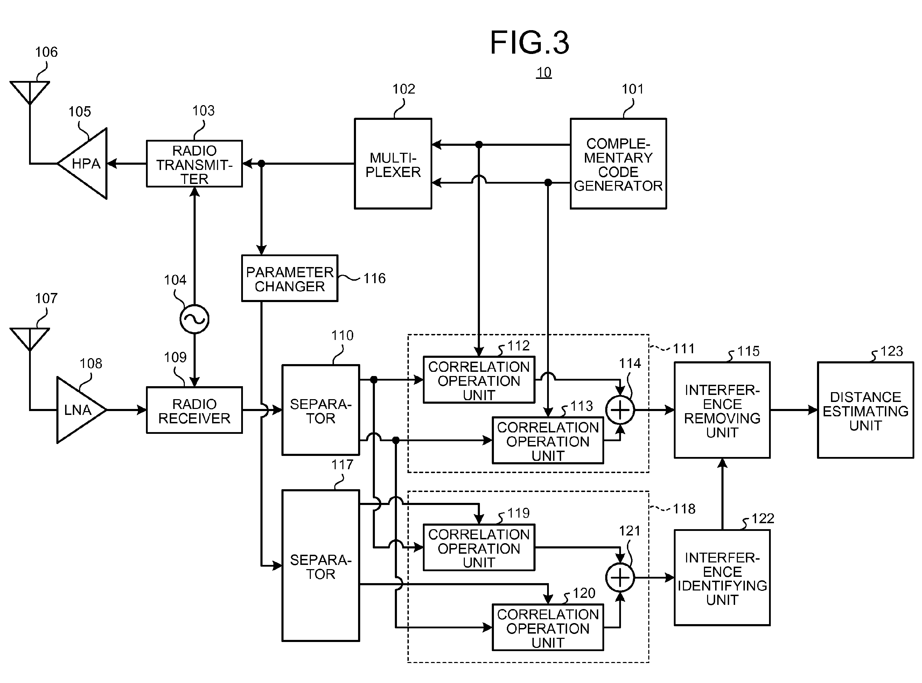

FIG. 3 is a functional block diagram for illustrating an example of the radar apparatus according to a first embodiment. In FIG. 3, a radar apparatus 10 includes a complementary code generator 101, a multiplexer 102, a radio transmitter 103, a local signal generator 104, a high power amplifier (HPA) 105, and an antenna 106. The radar apparatus 10 further includes a parameter changer 116, an antenna 107, a low noise amplifier (LNA) 108, and a radio receiver 109. The radar apparatus 10 further includes separators 110 and 117, demodulators 111 and 118, an interference identifying unit 122, an interference removing unit 115, and a distance estimating unit 123. The demodulator 111 includes correlation operation units 112 and 113 and an adding unit 114. The demodulator 118 includes correlation operation units 119 and 120 and an adding unit 121.
The complementary code generator 101 generates a complementary code formed from a pair of code sequences. One of the code sequences is output to the multiplexer 102 and the correlation operation unit 112. The other of the code sequences is output to the multiplexer 102 and the correlation operation unit 113. For example, when a complementary code (A, B) formed from a code sequence A and a code sequence B is used as a complementary code for generating a probe signal (hereinafter, sometimes referred to as a "probe signal generating code"), the complementary code generator 101 outputs the code sequence A to the correlation operation unit 112 and outputs the code sequence B to the correlation operation unit 113.

Hereinafter, a case in which the complementary code (A, B) is used as a probe signal generating code will be described as an example.

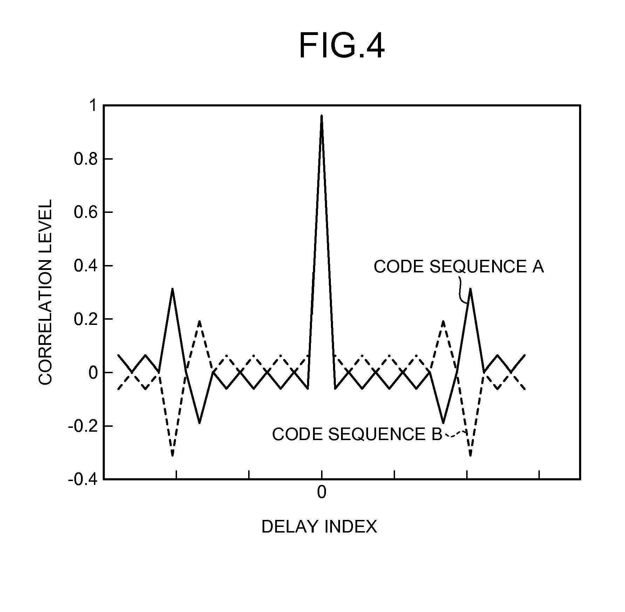

The result from the correlation operation of the complementary code is illustrated in FIG. 4. The result from the correlation operation in FIG. 4 has already been normalized using the code length. In the complementary code (A, B), adding the result from the autocorrelation operation of the code sequence A to the result from the autocorrelation operation of the code sequence B after aligning the delay times obtains a zero side lobe. This is represented as an expression (2). In the expression, the $R_A(k)$ stands for an autocorrelation function of the code sequence A. The $R_B(k)$ stands for an autocorrelation function of the code sequence B. Further, the N stands for the code length of each of the code sequences. For example, when each of the code sequences has nb bits, $N = 2^{nb}$ holds. Further, the k stands for the delay time or delay index of the correlation functions for the code sequence A and the code sequence B, respectively.

$$R_A(k) + R_B(k) = \begin{cases} 2N \, ; k = 0 \\ 0 \, ; else \end{cases} \qquad (2)$$

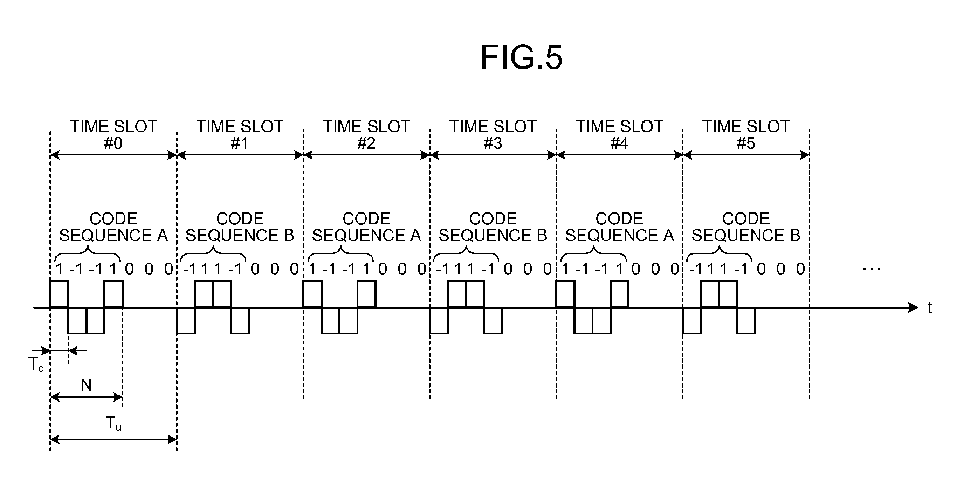

The multiplexer 102 multiplexes the code sequence A and the code sequence B. For example, the multiplexer 102 performs time multiplexing as illustrated in FIG. 5. FIG. 5 is a view of an example of the time multiplexing in the first embodiment.

As illustrated in FIG. 5, for example, the code sequence A includes [1, -1, -1, 1] and the code sequence B includes [-1, 1, 1, -1]. The code sequences A and B have a code length of four and are NRZ bipolar codes. Further, each time slot has an occupation time $T_U$, for example, including seven durations $T_C$ in units of durations $T_C$ to be described below. The multiplexer 102 places the code sequence A in the first four durations $T_C$ of each even number of the time slots #0, #2, #4, ... and places the code sequence B in the first four durations $T_C$ of each odd number of the time slots #1, #3, #5, .... Thus, the multiplexer 102 time-multiplexes the code sequence A and the code sequence B. Then, the multiplexer 102 outputs the time-multiplexed complementary code (A, B) to the radio transmitter 103 and the parameter changer 116. Note that the duration $T_C$ in FIG. 5 is a rectangular pulse that puts a code thereon. Note that FIG. 5 merely illustrates the time multiplexing of the code sequence A and the code sequence B. The code sequence A [1, -1, -1, 1] and the code sequence B [-1, 1, 1, -1] illustrated in FIG. 5 do not form a complementary code.

The local signal generator 104 generates a local signal and outputs the generated signal to the radio transmitter 103 and the radio receiver 109. Note that, although the local signal will be described as a carrier signal at a signal frequency in each expression to be described below, the local signal is not limited to a carrier signal at a single frequency. A local signal having a parameter in amplitude, bandwidth, phase, or the like can be used as the local signal.

The radio transmitter 103 converts the digital complementary code (A, B) into an analog complementary code and up-converts the frequency of the complementary code with the local signal. The radio transmitter 103 transmits the up-converted complementary code to a detection region of the radar apparatus 10 through the HPA 105 and the antenna 106. The up-converted complementary code is a probe signal of the radar apparatus 10. In other words, the radio transmitter 103 transmits, to the detection region, a probe signal generated using the complementary code (A, B) formed from the pair of the code sequence A and the code sequence B. Note that the power of the probe signal is amplified with the HPA 105.

Here, a probe signal $v_{TX}$ generated using the complementary code (A, B) is represented by an expression (3).

$$v_{TX}(t) = \sum_{m=0}^{\frac{M}{2}-1} \sum_{n=0}^{N-1} a_n p(t - nT_c) u(t - 2mT_u) + b_n p(t - nT_c) u(t - (2m+1)T_u) \qquad (3)$$

In the expression (3), the p(t) stands for the rectangular pulse of the duration $T_C$ and the u(t) stands for the rectangular pulse of the duration $T_U$. Further, the $a_n$ stands for each code forming the code sequence A and the $b_n$ stands for each code forming the code sequence B. Further, $T_U = LT_c$ is set according to a natural number L where L > N holds. Note that the $T_c$ is determined according to the distance resolution and the L is determined according to the maximum detectable distance. Thus, an ineffective time $(L - N)T_c$ in the $T_U$ or, namely, a time in which a code sequence is not placed in a time slot is padded with zero as illustrated in FIG. 5. Note that the carrier signal component is omitted in the expression (3).

Further, the objects of the radar apparatus 10 are distinguished with numbers k = 1 to K. It is assumed that the k-th object moves at the position a line-of-sight relative distance (hereinafter, sometimes merely referred to as a "distance") $d_k$ away from the radar apparatus 10 at a line-of-sight relative speed (hereinafter, sometimes merely referred to as a "speed") $v_k$. The propagation delay $\tau_k$ and Doppler frequency $\omega_d{}^k$ of each object with respect to a carrier frequency $\omega_c$ and a light speed $c_0$ are represented by an expression (4) at that time.

$$\tau_k = \frac{2d_k}{c_0}, \quad \omega_d^k = \frac{2\omega_c v_k}{c_0} \qquad (4)$$

Using the local signal, the radio receiver 109 down-converts the signal received through the antenna 107 and the LNA 108. The radio receiver 109 converts the down-converted analog received signal into a digital received signal, and outputs the digital received signal to the separator 110. Note that the power of the received signal is amplified with the LNA 108.

At that time in the case A, the received signals include the desired signal $v^D$ and the interference signal $v^U$. In the case B, the received signals do not include the desired signal $v^D$ but include the interference signal $v^U$. The desired signal $v^D$ is a signal received after a probe signal transmitted from the radar apparatus 10 has been reflected by the object $T^D$. Thus, the desired signal $v^D$ includes the signal component of the complementary code (A, B), similarly to the probe signal. In other word, the received signals also have a slot structure illustrated in FIG. 5, similarly to the probe signal.

The separator 110 operates as synchronizing with the time slots illustrated in FIG. 5 to separate the time-multiplexed received signals into the received signals at the even numbers of the time slots and the received signals at the odd numbers of the time slots. Then, the separator 110 outputs the received signals at the even numbers of the time slots to the correlation operation units 112 and 119 and outputs the received signals at the odd numbers of the time slots to the correlation operation units 113 and 120.

The correlation operation unit 112 calculates the correlation between the received signal at the even number of the time slots and the code sequence A and then outputs the result from the correlation operation to the adding unit 114. The correlation operation unit 113 calculates the correlation between the received signal at the odd number of the time slots and the code sequence B and then outputs the result from the correlation operation to the adding unit 114.

The adding unit 114 adds the operation result at the correlation operation unit 112 to the operation result at the correlation operation unit 113 and outputs the result from the addition to the interference removing unit 115. The addition result at the adding unit 114 corresponds to the demodulated signal in the demodulator 111. In other words, a first demodulation process on the received signal is performed with the correlation operation unit 112, the correlation operation unit 113, and the adding unit 114.

The parameter changer 116 changes the parameter of the complementary code (A, B) and outputs the parameter-changed complementary code to the separator 117. The change of the parameter of the complementary code will be described in detail below.

The separator 117 operates as synchronizing with the time slots illustrated in FIG. 5 to separate the time-multiplexed complementary code of which parameter has been changed into the code sequences at the even numbers of the time slots and the code sequences at the odd numbers of the time slots. Then, the separator 117 outputs the code sequences at the even numbers of the time slots to the correlation operation unit 119 and outputs the code sequences at the odd numbers of the time slots to the correlation operation unit 120.

The correlation operation unit 119 calculates the correlation between the received signal at the even number of the time slots and the parameter-changed complementary code at the even number of the time slots and then outputs the result from the correlation operation to the adding unit 121. Meanwhile, the correlation operation unit 120 calculates the correlation between the received signal at the odd number of the time slots and the parameter-changed complementary code at the odd number of the time slots and outputs the result from the correlation operation to the adding unit 121.

The adding unit 121 adds the operation result at the correlation operation unit 119 to the operation result at the correlation operation unit 120 and outputs the result from the addition to the interference identifying unit 122. The addition result at the adding unit 121 corresponds to the demodulated signal in the demodulator 118. In other words, a second demodulation process on the received signal is performed with the correlation operation unit 119, the correlation operation unit 120 and the adding unit 121.

The interference identifying unit 122 identifies the interference signal included in the received signals using the demodulated signal input from the demodulator 118. Then, the interference identifying unit 122 outputs the information indicating the position of the identified interference signal on the time axis or, namely, on the delay index (hereinafter, sometimes referred to as "interference signal position information") to the interference removing unit 115. The identification of the interference signal will be described in detail below.

The interference removing unit 115 removes the interference signal corresponding to the interference signal position information from the demodulated signals input from the demodulator 111, and outputs a received signal that does not include the interference signal or, namely, a desired signal to the distance estimating unit 123. The method for removing the interference signal will be described in detail below.

The distance estimating unit 123 estimates the distance between the radar apparatus 10 and the object based on the position of the correlation peak in the desired signal on the time axis, for example, using the expression (4).

At that case, the probe signal generating code is the complementary code (A, B), so that the down-converted desired signal among the received signals at the even numbers of the time slots is represented by an expression (5) and the down-converted desired signal among the received signals at the odd numbers of the time slots is represented by an expression (6). Note that the noises are omitted in the expressions (5) and (6). The "received (including desired and interference) signal" described in each of the embodiments has already been down-converted.

$$v_{RX}^{even}(t) = \sum_{m=1}^{K} \sum_{n=0}^{N-1} a_n p(t - \tau_k - nT_c) \exp\left[ j\omega_d^k \left( t - \frac{\tau_k}{2} \right) \right] \tag{5}$$

$$v_{RX}^{odd}(t) = \sum_{m=1}^{K} \sum_{n=0}^{N-1} b_n p(t - \tau_k - nT_c) \exp\left[ j\omega_d^k \left( t - \frac{\tau_k}{2} \right) \right] \tag{6}$$

Further, the result from the correlation operation between the desired signal among the received signals at the even numbers of the time slots and the code sequence A (A = {$a_m$}) for the correlation calculation is represented by an expression (7). Hereinafter, for simplicity, the correlation for a time width of only a slot time will be described. The result from the correlation operation between the desired signal among the received signals at the odd numbers of the time slots and the code sequence B (B = {$b_m$}) for the correlation calculation is represented by an expression in which the "even" is replaced by an "odd", the "$a_n$" is replaced by a "$b_n$", and the "$a_m$" is replaced by the "$b_m$" in the expression (7). Note that, for simplicity, K is fixed to 1, the Q is the number of data samples in $T_c$. In addition, the correlation of the rectangular pulse forms into a triangle. And of course, Q is greater than or equal to 2 according to the sampling theorem.

$$v_{BB}^{even}(\gamma) = \frac{1}{T_u} \int_0^{T_u} v_{TX}^{even,*}(t) v_{RX}^{even}(t + \gamma) \, dx$$

$$= \frac{Q}{LT_c} \sum_{n,m=0}^{N-1} a_n a_m \int_{nT_c}^{(n+1)T_c} p(t - nT_c) \, p(t + \gamma - \tau_k - mT_c) \exp\left[ j\omega_d \left( t + \gamma - \frac{\tau_k}{2} \right) \right] dt \tag{7}$$

In the following description, the k is not the identification number of the object but the delay index. And the number of objects; K is fixed to 1.

To generate a correlation peak in the result from the correlation operation when $\gamma = \tau_k = kT_c$ holds, the integrand in an interval [$nT_c$, (n + 1)$T_c$] is not identically be zero. Thus, the $v_{BB}^{even}(kT_c)$ and the $v_{BB}^{odd}(kT_c)$ are represented by expressions (8) and (9), respectively.

$$v_{BB}^{even}\left(kT_c\right) = \frac{Q}{LT_c}\sum_{n,m=0}^{N-1} a_n a_m \int_{nT_c}^{(n+1)T_c} p(t-nT_c)\,p(t-mT_c)\exp\left[j\omega_d\left(t+\frac{kT_c}{2}\right)\right]dt$$

$$= \frac{Q}{LT_c}\sum_{n=0}^{N-1} a_n a_n \int_{nT_c}^{(n-1)T_c} \exp\left[j\omega_d\left(t+\frac{kT_c}{2}\right)\right]dt$$

$$= \frac{Q}{L}\sum_{n=0}^{N-1} a_n a_n \exp\left[j\omega_d T_c\left(n+\frac{k+1}{2}\right)\right]\sin c\left(\frac{\omega_d T_c}{2}\right)$$

$$(8)$$

$$v_{BB}^{odd}\left(kT_c\right) = \frac{Q}{L}\sum_{n=0}^{N-1} b_n b_n \exp\left[j\omega_d T_c\left(n+\frac{k+1}{2}\right)\right]\sin c\left(\frac{\omega_d T_c}{2}\right)$$

$$(9)$$

Thus, in the cases A and B, the demodulated signal output from the demodulator 111 is represented by an expression (10).

$$v_{BB}^{even}\left(\gamma\right)+v_{BB}^{odd}\left(\gamma\right)=\begin{cases}\dfrac{2QN}{L}\sin c\left(\dfrac{\omega_d NT_c}{2}\right)\exp\left[j\omega_d T_c\left(\dfrac{N+k}{2}\right)\right] & ;\gamma=kT_c\\[10pt] 0 & ;else\end{cases}$$

$$(10)$$

Here, the complementary code used for generating the interference signal (hereinafter, sometimes referred to as an "interference signal complementary code") is regarded, for example, as a complementary code (C, D) formed from a code sequence C (C = {$c_m$}) and a code sequence D (D = {$d_m$}).

Thus, when the placement positions of the code sequence A and the code sequence C are matched at the even numbers of the time slots, the result from the correlation operation between the code sequence A and the code sequence C is represented by an expression (11). The $c_m$ stands for each code forming the code sequence C. Note that the object $T^U$ is not always at half distance between the radar 2 and the radar 1. However, for simplicity, the delay due to the Doppler is regarded as $\tau^U/2$. Meanwhile, when the placement positions of the code sequence B and the code sequence D are matched at the odd numbers of the time slots, the result from the correlation operation between the code sequence B and the code sequence D is represented by an expression in which the "even" is replaced by an "odd", the "$a_n$" is replaced by the "$b_n$", and the "$c_m$" is replaced by the "$d_m$" in the expression (11). The $d_m$ stands for each code forming the code sequence D.

$$v^U\left(\gamma\right) = \frac{1}{T_u}\int_0^{T_u} v_{TX}^{even,*}(t)\,v_{RX}^{even}(t+\gamma)\,dx$$

$$= \frac{Q}{LT_c}\sum_{n,m=0}^{N-1} a_n c_m \int_{nT_c}^{(n+1)T_c} p(t-nT_c)\,p(t+\gamma-\tau^U-mT_c)\exp\left[j\omega_d^U\left(t+\gamma-\frac{\tau^U}{2}\right)\right]dt$$

$$(11)$$

To avoid causing the result from the operation of the expression (11) to be identically zero in an interval [$nT_c$, $(n+1)T_c$], for $\tau^U = uT_c$, n = (u + m) hold. Thus, the result from the correlation operation between the code sequence A and the code sequence C is represented by an expression (12). Further, the result from the correlation operation between the code sequence B and the code sequence D is represented by an expression (13). Note that a specific value of integral in the integral range [-$\gamma$, $T_c$ - $\gamma$] varies depending on whether the $\gamma$ is positive or negative. Thus, the expressions (12) and (13) express only the case in which $\gamma > 0$ holds.

$$v^{U,even}(\gamma) = \frac{1}{LT_c}\sum_{n=0}^{N-1}a_n c_{n-u}\int_{nT_c}^{(n+1)T_c} p(t-nT_c)\,p(t+\gamma-nT_c)\exp\left[j\omega_d^U\left(t+\gamma-\frac{uT_c}{2}\right)\right]dt$$

$$= \frac{1}{LT_c}\sum_{n=0}^{N-1}a_n c_{n-u}\int_0^{T_c} p(x)\,p(x+\gamma)\exp\left[j\omega_d^U\left(x+\gamma+nT_c-\frac{uT_c}{2}\right)\right]dx$$

$$= \frac{1}{LT_c}\sum_{n=0}^{N-1}a_n c_{n-u}\int_0^{T_c-\gamma} \exp\left[j\omega_d^U\left(x+\gamma+nT_c-\frac{uT_c}{2}\right)\right]dx$$

$$= \frac{1}{L}\left(1-\frac{\gamma}{T_c}\right)\mathrm{sinc}\left[\frac{\omega_d^U T_c}{2}\left(1-\frac{\gamma}{T_c}\right)\right]\sum_{n=0}^{N-1}a_n c_{n-u}\exp\left[j\frac{\omega_d^U T_c}{2}\left(2n+1-u+\frac{\gamma}{T_c}\right)\right] \quad (12)$$

$$v^{U,odd}(\gamma) = \frac{1}{L}\left(1-\frac{\gamma}{T_c}\right)\mathrm{sinc}\left[\frac{\omega_d^U T_c}{2}\left(1-\frac{\gamma}{T_c}\right)\right]\sum_{n=0}^{N-1}b_n d_{n-u}\exp\left[j\frac{\omega_d^U T_c}{2}\left(2n+1-u+\frac{\gamma}{T_c}\right)\right] \quad (13)$$

$$v^{U,even}(\gamma)+v^{U,odd}(\gamma)$$
$$= \frac{1}{L}\left(1-\frac{\gamma}{T_c}\right)\mathrm{sinc}\left[\frac{\omega_d^U T_c}{2}\left(1-\frac{\gamma}{T_c}\right)\right]\sum_{n=0}^{N-1}[a_n c_{n-u}+b_n d_{n-u}]\exp\left[j\frac{\omega_d^U T_c}{2}\left(2n+1-u+\frac{\gamma}{T_c}\right)\right] \quad (14)$$

It is found from the expression (14) that the interference signal can be identified when the code sequences A and B are selected according to the code sequences C and D with avoiding causing at least one of the correlation operation result between the code sequence A and the code sequence C and the correlation operation result between the code sequence B and the code sequence D to be zero.

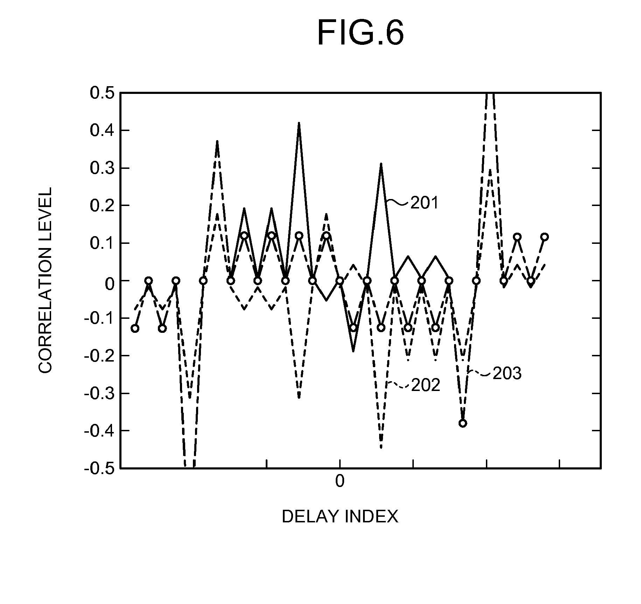

The results from the correlation operations when the code sequences A and B are selected according to the code sequences C and D with avoiding causing both of the correlation operation result between the code sequence A and the code sequence C and the correlation operation result between the code sequence B and the code sequence D to be zero are illustrated in FIG. 6. In FIG. 6, a correlation operation result 201 denotes the correlation operation result between the code sequence A and the code sequence C. A correlation operation result 202 denotes the correlation operation result between the code sequence B and the code sequence D. Further, a correlation operation result 203 denotes a value obtained from adding the correlation operation result 201 to the correlation operation result 202. Note that, to facilitate visualization in FIG. 6, the correlation operation result 202 or the correlation operation result 201 is only illustrated at the positions where the correlation operation result 201 and the correlation operation result 202 have the same value.

Process for Changing Parameter of Complementary code and Process for Identifying Interference

The parameter changer 116 changes the "parameter" of the complementary code (A, B) input from the multiplexer 102. The parameter-changed complementary code is an interference signal identifying complementary code. The "parameter" of the complementary code is one of the following parameters 1 to 3.

<Parameter 1> The order of the pair of code sequences forming the complementary code. In other words, the parameter changer 116 changes the complementary code (A, B) to the complementary code (B, A).

<Parameter 2> The polarity of the pair of code sequences forming the complementary code. In other words, the parameter changer 116 changes the complementary code (A, B) to the complementary code (-A, B), (A, -B), or (-A, -B). Note that, when a complex code is also included in addition to the binary code to make it more general, the polarity of the parameter 2 is translated into the phase angle of the code on the Gaussian plane. When the binary code has ±1, the +1 corresponds to zero degree, and the -1 corresponds to 180 degrees, respectively.

<Parameter 3> The positions of the pair of code sequences forming the complementary code in the time slot or, namely, the phase of the pair of code sequences. For example, the parameter changer 116 shifts the pair of code sequences for generating a probe signal illustrated in FIG. 5 one duration $T_c$ backward in each slot. Note that each code sequence can be cyclic-shifted as the position of each pair of code sequences in the time slot is fixed.

Note that the parameter changer 116 can change one of the parameters 1 to 3. The parameter changer 116 can also change a plurality of parameters among the parameters 1 to 3.

Here, as an example, the parameter changer 116 changes the complementary code (A, B) input from the multiplexer 102 to the complementary code (B, -A). Thus, the complementary code (B, -A) is input as an interference signal identifying complementary code to the separator 117. When the code sequence "A" is formed from 1, -1, -1, and 1 as illustrated in FIG. 5, the code sequence "-A" is formed from -1, 1, 1, and -1. Hereinafter, as an example, the case in which the parameter changer 116 changes the complementary code (A, B) to the complementary code (B, -A) will be described.

The separator 117 separates the complementary code (B, -A) into the code sequence B and the code sequence -A to output the code sequence B to the correlation operation unit 119 and output the code sequence -A to the correlation operation unit 120.

Thus, the correlation operation between the code sequence B for identifying an interference signal and the code sequence C of the interference signal is performed in the correlation operation unit 119. Meanwhile, the correlation operation between the code sequence -A for identifying an interference signal and the code sequence D of the interference signal is performed in the correlation operation unit 120. Then, the adding unit 121 adds the result from the correlation operation in the correlation operation unit 119 to the result from the correlation operation in the correlation operation unit 120. Thus, the demodulated signal output from the demodulator 118 is represented by an expression in which the "$a_n$" is replaced by the "$b_n$" and the "$b_n$" is replaced by the "$-a_n$" in the expression (14).

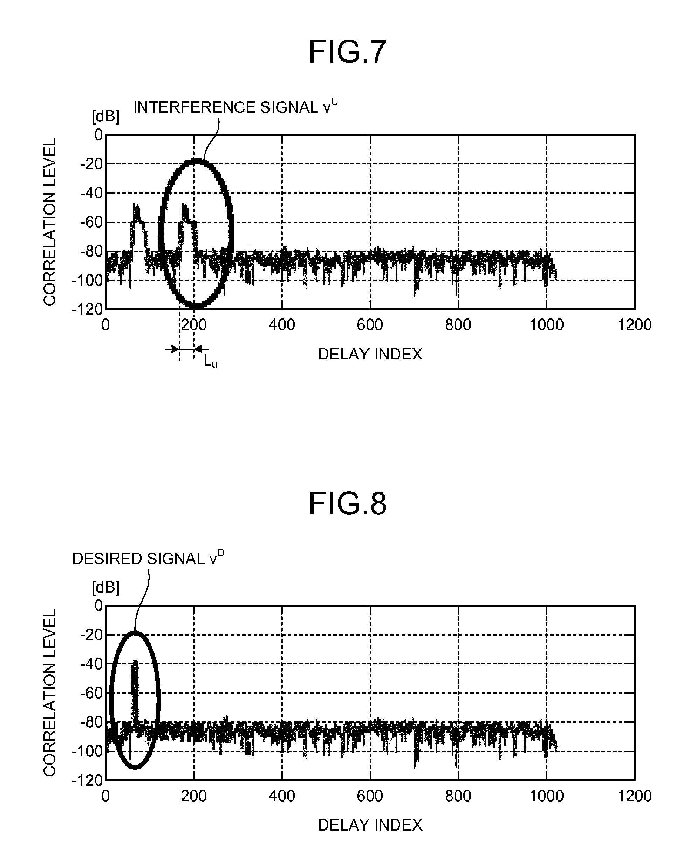

Here, for example, in the case A in which the radar 1 and the radar 2 have the same complementary code that is the complementary code (A, B), the interference signal has the complementary code (A, B). Thus, the correlation operation between the code sequence B for identifying an interference signal and the code sequence A of the interference signal is performed in the correlation operation units 119. Meanwhile, the correlation operation between the code sequence -A for identifying an interference signal and the code sequence B of the interference signal is performed in the correlation operation units 120. Neither the correlation between the code sequence B and the code sequence A nor the correlation between the code sequence -A and the code sequence B is an autocorrelation. Thus, a peak of an autocorrelation as illustrated in FIG. 4 does not appear. On the other hand, a cross-correlation occurs between the code sequence B and the code sequence A and a cross-correlation also occurs between the code sequence -A and the code sequence B. Thus, the output from the demodulator 118 is a cross-correlation component of the interference signal identifying complementary code (B, -A) relative to the complementary codes (A, B) of the desired signal and the interference signal as illustrated in FIG. 7. As described above, together with FIG. 2, the cross-correlation components have the same value. This means that the interference signal and the desired signal have the same complementary code. Thus, the code of the interference signal can be identified. In other words, in FIG. 2, the first correlation component is caused by the desired signal. The second correlation component is caused by the interference signal. Thus, the interference signal position information is also obtained.

Note that, to more quantitatively determine that the interference signal and the desired signal have the same complementary code, the similarity between the two correlation components in FIG. 7 is preferably determined, for example, with the norm distance or the correlation operation. The method for separating the desired signal from the interference signal to remove the interference signal will be described in detail below.

The $L_u$ in FIG. 7 has a width twice as wide as the time width in which a code exists in the interference signal (hereinafter, sometimes referred to as an "interference signal time width"). Identifying the interference signal time width is more important when the interference signal and the desired signal use different complementary codes.

As described above, the interference identifying unit 122 can identify the interference signal included in the received signals by comparing the outputs from the demodulators 111 and 118 even when the radar 1 and the radar 2 have the same probe signal generating code.

In the case A, the output from the demodulator 111 has the two correlation peaks as illustrated in FIG. 2. However, the interference removing unit 115 can determine that the latter correlation peak of the two correlation peaks in FIG. 2 is caused by the interference signal according to the interference signal position information input from the interference identifying unit 122. Then, the interference removing unit 115 removes the latter correlation peak from the correlation operation result illustrated in FIG. 2. Thus, the output from the interference removing unit 115 includes only the correlation peak of the desired signal as illustrated in FIG. 8. Note that a method in which the interference signal itself is regenerated and subtracted from the received signals or in which only the correlation value is subtracted from the autocorrelation operation result illustrated in FIG. 2 can be used as a specific method for removing the latter correlation peak because the code of the interference signal and the interference signal position information have been identified. A notch filter can be used for subtracting only the correlation value from the autocorrelation operation result illustrated in FIG. 2.

On the other hand, in the case B, the output from the demodulator 111 has only the latter correlation peak in FIG. 2. Similarly to in the case A, the output from the demodulator 118 includes the interference signal of the latter time width $L_u$ in FIG. 7. Thus, even in the case B, the interference identifying unit 122 can identify the interference signal included in the received signals and the interference signal position information. Thus, similarly to in the case A, the interference removing unit 115 can remove the correlation peak of the interference signal even in the case B.

According to the first embodiment as described above, in the radar apparatus 10, the radio transmitter 103 transmits, to the detection region, the probe signal generated using the first complementary code formed from the first pair of code sequences, for example, the complementary code (A, B) as a probe signal generating code. The demodulator 111 demodulates the received signals using the first complementary code, for example, the complementary code (A, B) to obtain a first demodulated signal. The demodulator 118 demodulates the received signals using the second complementary code formed from the second pair of code sequences in which at least one of the order, polarity, and position in the time slot of the first pair of code sequences has been changed, for example, the complementary code (B, -A) to obtain a second demodulated signal. The interference identifying unit 122 identifies the interference signal included in the received signals using the second demodulated signal. Thus, the radar apparatus 10 can generate the cross-correlation component relative to the interference signal in the second demodulated signal, for example, even when the desired signal and the interference signal have the same complementary code. Thus, the radar apparatus 10 can identify the interference signal included in the received signals. Further, even when the number of complementary codes to be selected is limited, the interference signal identifying complementary code can easily be generated because a parameter-changed probe signal generating code is used as the interference signal identifying complementary code.

[b] Second Embodiment

A second embodiment relates to the process for changing the parameter of a probe signal mainly when the interference signal is identified.

Configuration of Radar Apparatus

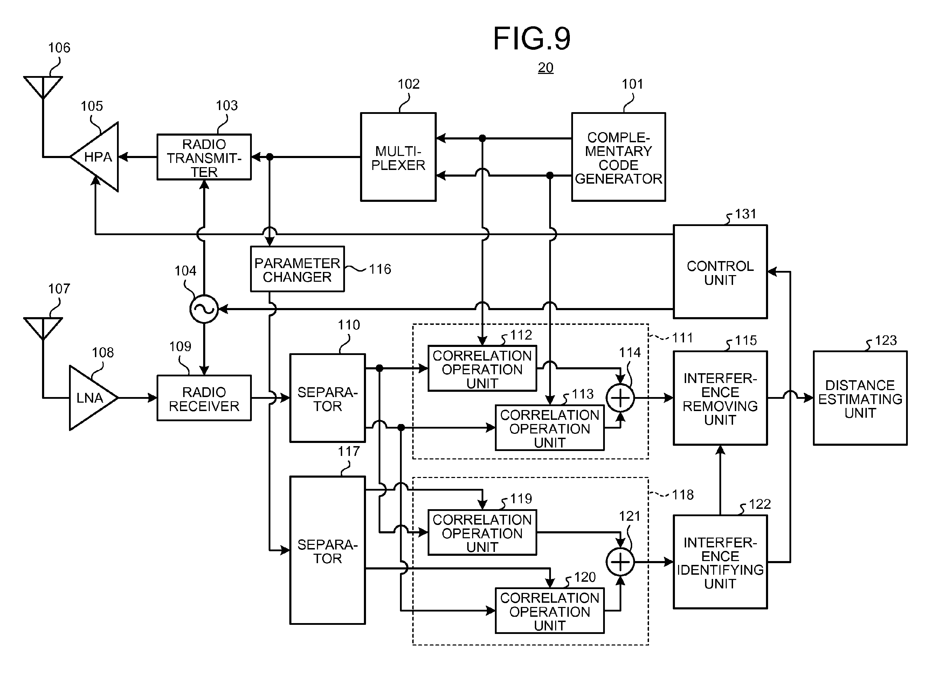

FIG. 9 is a functional block diagram for illustrating an example of the radar apparatus according to the second embodiment. In FIG. 9, a radar apparatus 20 further includes a control unit 131 in addition to the components in the first embodiment.

An interference identifying unit 122 performs the following process in addition to the process in the first embodiment. In other words, the interference identifying unit 122 outputs, to the control unit 131, the signal indicating whether an interference signal has been identified.

The control unit 131 changes the parameter of the probe signal when the interference signal has been identified in the interference identifying unit 122. Specifically, the "parameter" of the probe signal is, for example, the transmit frequency of the probe signal, the phase of the probe signal, the bandwidth of the probe signal, or the transmission power of the probe signal (or, namely, the amplitude of the probe signal).

The control unit 131 outputs, to the local signal generator 104, a control signal for designating the changed frequency when the transmit frequency of the probe signal is changed. In response to the control signal, the local signal generator 104 changes the frequency of a local signal to the designated frequency. This changes the transmit frequency of the probe signal output from the radio transmitter 103 so as to allow the transmit frequency of the probe signal of the radar apparatus 20 to differ from the transmit frequency of the probe signal of another radar apparatus that is the source of the interference signal. This can prevent the occurrence of interference between the radar apparatus 20 and another radar apparatus. Note that the change of the bandwidth by frequency hopping is regarded as the change of the transmit frequency, so that the control unit 131 can change the bandwidth of the probe signal in the same manner as the change of the transmit frequency of the probe signal.

Alternatively, the control unit 131 outputs, to the local signal generator 104, a control signal designating the changed phase when the phase of the probe signal is changed. In response to the control signal, the local signal generator 104 changes the phase of a local signal to the designated phase. This changes the phase of the probe signal output from the radio transmitter 103 so as to allow the phase of the probe signal of the radar apparatus 20 to differ from the phase of the probe signal of another radar apparatus that is the source of the interference signal. This can prevent the occurrence of interference between the radar apparatus 20 and another radar apparatus.

The control unit 131 outputs, to the HPA 105, an instruction for increasing (changing, in general) the transmission power when the transmission power of the probe signal is changed. In response to the instruction, the HPA 105 increases the transmission power of a probe signal output from the radio transmitter 103. This can restrain the occurrence of interference. Note that, when it is difficult to identify the interference signal, the transmission power of the probe signal is virtually decreased to zero on purpose. When a demodulated component exists, the interference signal position information or the like can be identified with the demodulated component. The identification can separate the desired signal from the interference signal.

Note that the control unit 131 can change one of the transmit frequency, phase, bandwidth and transmission power of the probe signal. The control unit 131 can also change a plurality of parameters among the parameters.

According to the second embodiment as described above, in the radar apparatus 20, the control unit 131 changes at least one of the transmit frequency, phase, bandwidth and transmission power of the probe signal when the interference identifying unit 122 identifies the interference signal. This can avoid or restrain the interference.

[c] Third embodiment

A third embodiment relates to the process for changing the probe signal generating code when an interference signal is identified.

Configuration of Radar Apparatus

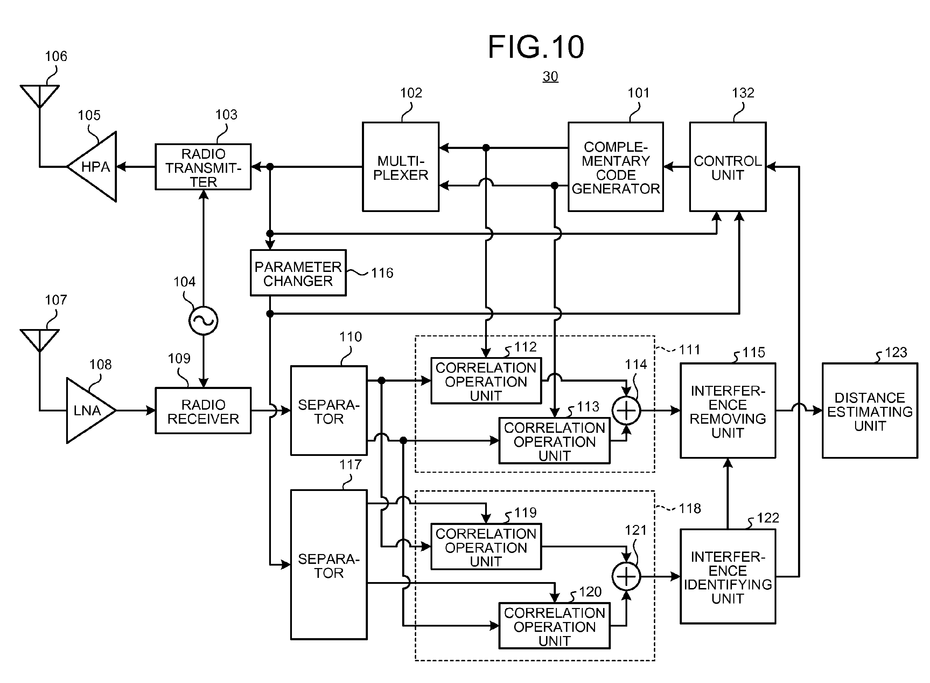

FIG. 10 is a functional block diagram for illustrating an example of the radar apparatus according to the third embodiment. In FIG. 10, a radar apparatus 30 further includes a control unit 132 in addition to the components in the first embodiment.

An interference identifying unit 122 performs the following process in addition to the process in the first embodiment. In other words, the interference identifying unit 122 outputs, to the control unit 132, the signal indicating whether an interference signal has been identified.

The parameter-changed complementary code or, namely, the interference signal identifying complementary code (B, -A) is input to the control unit 132 from the parameter changer 116 with the input of the complementary code (A, B) from the multiplexer 102.

The control unit 132 gives the complementary code generator 101 an instruction to generate a complementary code different from the complementary code (A, B) when the interference identifying unit 122 identifies the interference signal. In other words, the control unit 132 changes the probe signal generating code to a complementary code different from the complementary code (A, B) when the interference identifying unit 122 identifies the interference signal. This can allow the probe signal generating code of the radar apparatus 30 to differ from the probe signal generating code of the source of the interference signal. Thus, especially, even when the power of the interference signal is at the same level as the power of the desired signal, the interference can be avoided or restrained.

Here, in the case A, the two correlation peaks; the correlation peak of the desired signal and the correlation peak of the interference signal, and the two cross-correlation components; the cross-correlation component of the desired signal and the cross-correlation component of the interference signal appear in the correlation operation result between the complementary code (A, B) of the desired signal and the received signals, as illustrate in FIGs. 2 and 7. As described above, comparing FIGs. 2 and 7 can determine that the interference signal and the probe signal generating code of the radar apparatus 30 have the same complementary code (A, B). At that time, the control unit 132 preferably changes the probe signal generating code, for example, to the parameter-changed complementary code (B, -A) when the interference identifying unit 122 identifies the interference signal. This can easily generate a complementary code different from the probe signal generating code of the source of the interference signal.

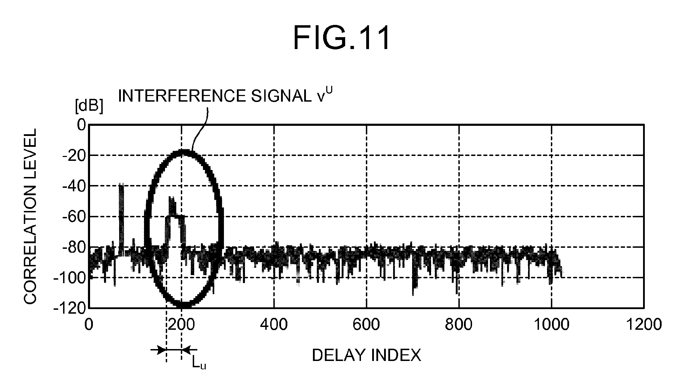

When the control unit 132 further controls the parameter changer 116 to operate as a simple wiring, the outputs from the demodulators 111 and 118 equally have the forms as illustrated in FIG. 11. Thus, it can be determined according to the level and time width of the latter correlation value in FIG. 11 that the latter correlation values in FIGs. 2 and 7 are caused by the interference signal. This can separate the desired signal from the interference signal. The interference signal can similarly be separated in the case B.

Further, the control unit 132 more preferably changes the probe signal generating code to a complete complementary code for the complementary code (A, B) or a complete complementary code for the complementary code of the interference signal when the interference identifying unit 122 has identified the interference signal.

Herein, the "complete complementary code" is a complementary code having a relationship represented in an expression (16) with the complementary code (A, B) from among the complementary codes (C, D) represented by an expression (15), similarly to by the expression (2). In other words, a complementary code (C, D) that causes the result from the addition of the cross-correlation function between the code sequence A and the code sequence C to the cross-correlation function between the code sequence B and the code sequence D to be always zero at an arbitrary delay time is the complete complementary code for the complementary code (A, B). When the relationship represented by an expression (16) is satisfied, the complementary code (A, B) and the complementary code (C, D) have a relationship in which the codes become the complete complementary code for each other.

$$R_C(k) + R_D(k) = \begin{cases} 2N : k = 0 \\ 0 : else \end{cases} \qquad (15)$$

$$R_{A,C}(k) + R_{B,D}(k) = 0 : for \forall k \qquad (16)$$

Thus, the change of the probe signal generating code to the complete complementary code (C, D) for the complementary code (A, B) by the control unit 132 can surely prevent the occurrence of interference.

Note that the code information about the complementary code and the complete complementary code can be stored, for example, in the complementary code generator 101 or in a memory of a logic circuit configured to control the operations of whole the radar apparatus, or can be stored in a memory or the like of an arbitration control unit for the whole system when a plurality of radar apparatuses is systematically coordinated with each other.

[d] Fourth Embodiment

A fourth embodiment relates to the control of the operation of the demodulator 118.

Configuration of Radar Apparatus

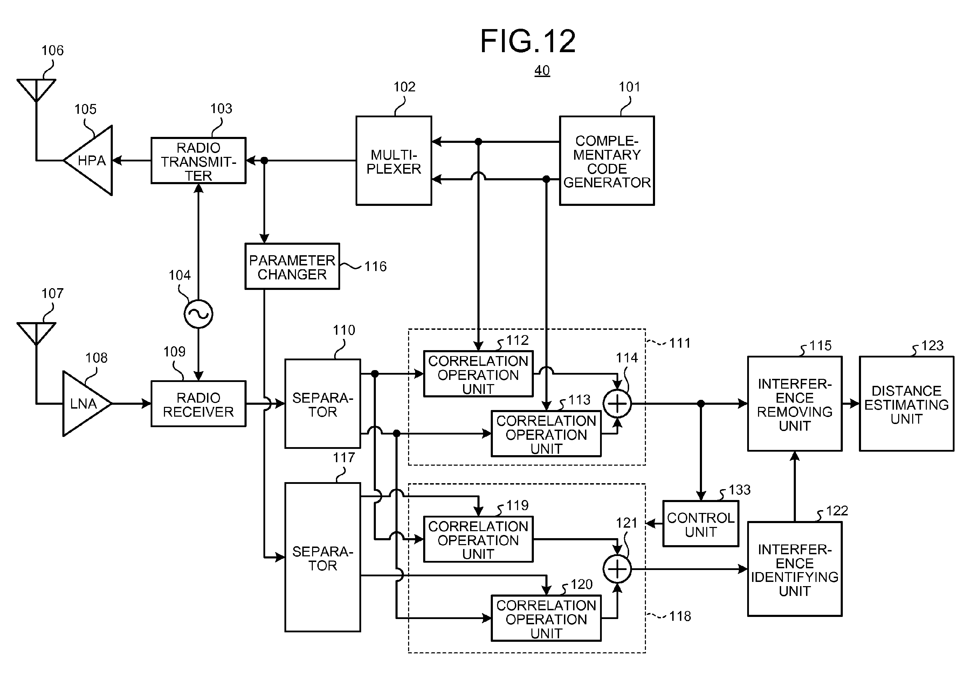

FIG. 12 is a functional block diagram for illustrating an example of the radar apparatus according to the fourth embodiment. In FIG. 12, a radar apparatus 40 further includes a control unit 133 in addition to the components in the first embodiment.

A demodulated signal is input from the demodulator 111 to the control unit 133.

When an interference signal is not included in the received signals, only the correlation peak of the desired signal appears in the signal demodulated in the demodulator 111 or, namely, the correlation operation result added by the adding unit 114, as illustrated in FIG. 8. On the other hand, in the case A, only the two correlation peaks; the correlation peak of the desired signal and the correlation peak of the interference signal appear in the signal demodulated in the demodulator 111 or, namely, the correlation operation result added by the adding unit 114, as illustrated in FIG. 2. Thus, the control unit 133 can estimate the existence of the interference signal by monitoring the correlation peak appearing in the demodulated signal and thus can separate the desired signal from the interference signal. Further, when an interference signal is not included in the received signals, the demodulating operation in the demodulator 118 is not required. In other words, the demodulating operation in the demodulator 118 becomes useless when an interference signal is not included in the received signals. Note that the information about the monitoring result can be stored, for example, in a memory of a logic circuit configured to control the operations of whole the radar apparatus, or can be stored in a memory or the like of an operation control unit for the whole system when a plurality of radar apparatuses is systematically coordinated with each other.

Then, the control unit 133 operates the demodulator 118 when a correlation peak that has not existed in the past appears in the demodulated signal output from the demodulator 111. In other words, the control unit 133 stops the operation of the demodulator 118 while the correlation peak in the demodulated signal output from the demodulator 111 remains unchanged.

Thus, the demodulator 118 demodulates the received signals using the parameter-changed complementary code, for example, the complementary code (B, -A) only when a correlation peak that has not existed in the past appears in the demodulated signal output from the demodulator 111.

This can stop an unnecessary demodulating process when an interference signal is not included in the received signals and thus can reduce the electric consumption by the radar apparatus 40.

Further, the control unit 133 preferably stops the operations of the parameter changer 116, the separator 117, and the interference identifying unit 122 while the correlation peak in the demodulated signal output from the demodulator 111 remains unchanged. This can further reduce the electric consumption by the radar apparatus 40.

Here, the second to fourth embodiments can be appropriately combined and used. Hereinafter, the operation of the radar apparatus 40 with the combination of all the second to fourth embodiments will be described. In other words, the description will be done below on the assumption that the control unit 133 of the radar apparatus 40 in the fourth embodiment also has the functions of both of the control unit 131 illustrated in FIG. 9 and the control unit 132 illustrated in FIG. 10.

Operation of Radar Apparatus

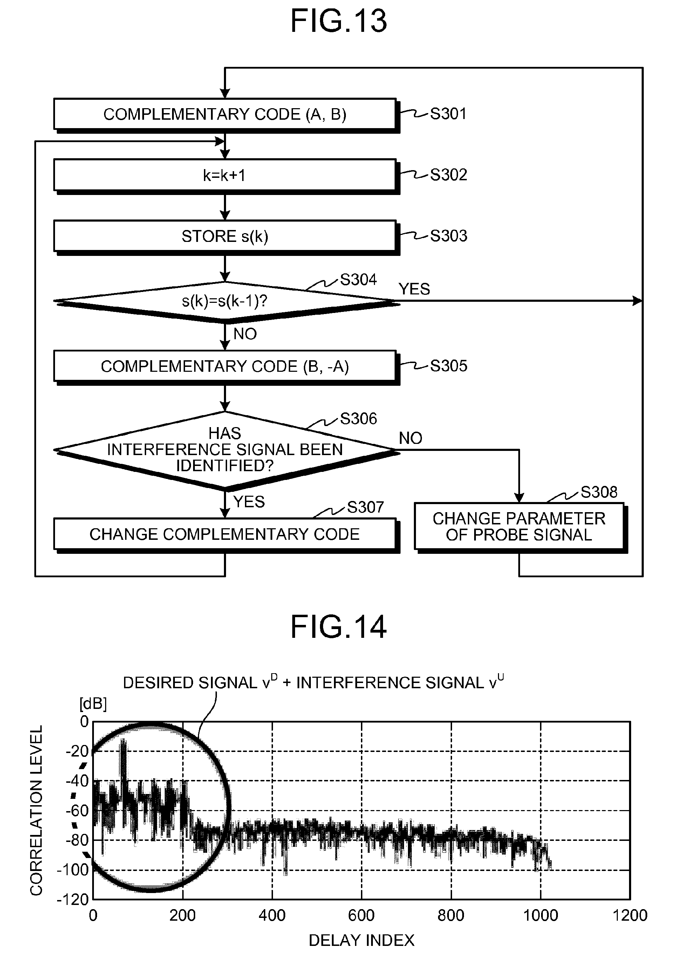

FIG. 13 is a flowchart for describing an operation of the radar apparatus in the fourth embodiment.

The demodulator 111 demodulates the received signals using the complementary code (A, B) (step S301).

The control unit 133 updates a counter k to k + 1 (step S302). The k at that time is a counter value and not a delay index.

The control unit 133 stores a demodulated signal s(k) input from the demodulator 111 this time in a memory (not illustrated in the drawings) (step S303).

The control unit 133 compares the demodulated signal s(k) input from the demodulator 111 this time to a demodulated signal s(k - 1) input from the demodulator 111 the last time (step S304).

When the s(k) differs from the s(k - 1) (step S304: No), the control unit 133 operates the parameter changer 116, the separator 117, the demodulator 118 and the interference identifying unit 122. This causes the demodulator 118 to demodulate the received signals using the parameter-changed complementary code, for example, the complementary code (B, -A) (step S305). Note that "when the s(k) differs from the s(k - 1)" specifically means, for example, when a correlation peak that has not existed in the past appears in the demodulated signal output from the demodulator 111.

When the interference identifying unit 122 identifies the interference signal in the demodulated signal demodulated using the complementary code (B, -A) (step S306: Yes), the control unit 132 changes the probe signal generating code to a complementary code different from the complementary code (A, B) (step S307). The process goes back to step S302 after step S307.

On the other hand, when the s(k) is the same as the s(k - 1) (step S304: Yes), the process goes back to step S301. When the interference identifying unit 122 does not identify the interference signal (step S306: No), the process goes back to step S301 after the parameter of the probe signal has been changed (step S308).

[e] Fifth Embodiment

A fifth embodiment relates to the estimation of the complementary code of the interference signal.

An exemplary result from the correlation operation when an interference signal is included in the received signals will be described using FIG. 14. FIG. 14 is a view of an exemplary result from the correlation operation in a case C to be described below.

<Case C> In FIG. 1, when the radar 1 and the radar 2 have similar complementary codes not be the same and the object $T^D$ and the object $T^U$ are located near each other, the result from the demodulation (the result from the correlation operation) of the received signal v in the radar 1 has the form as illustrated in FIG. 14. In other words, the correlation peak with the correlation operation between the complementary code of the radar 1 and the desired signal $v^D$ is masked at worst due to the effects of the cross-correlation between the complementary code of the

radar 1 and the complementary code of the radar 2. The cross-correlation between the complementary code of the radar 1 and the complementary code of the radar 2 appears as the noise floor. This makes it difficult to detect the correlation peak of the desired signal in the radar 1.

Even in the case C, the interference signal is identified, similarly to in the first to fourth embodiments, so that the interference signal can be removed from the received signals.

On the other hand, the radar 1 and the radar 2 do not have the same probe signal generating code in the case C. This makes it difficult for the radar 1 to estimate the probe signal generating code of the radar 2 from the probe signal generating code of the radar 1.

In light of the foregoing, a radar apparatus in the fifth embodiment estimates the complementary code of the interference signal from the interference signal.

Configuration of Radar Apparatus

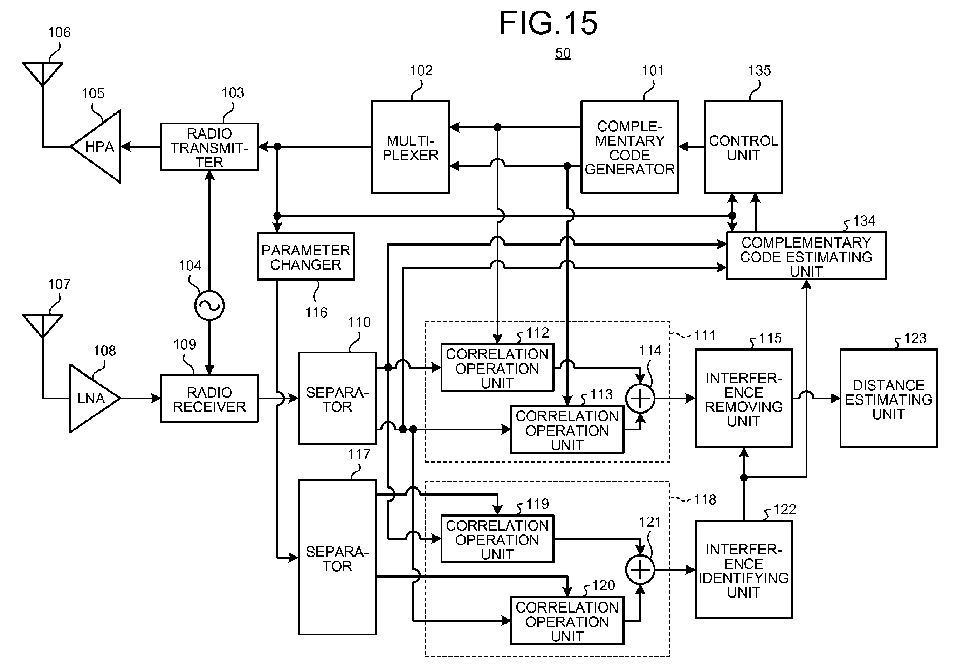

FIG. 15 is a functional block diagram for illustrating an example of the radar apparatus according to the fifth embodiment. In FIG. 15, a radar apparatus 50 further includes a complementary code estimating unit 134 and a control unit 135 in addition to the components in the first embodiment.

An interference identifying unit 122, a separator 110, and a multiplexer 102 further perform the following processes in addition to the process in the first embodiment.

In other words, the interference identifying unit 122 outputs a time width $L_u$ of the identified interference signal to the complementary code estimating unit 134.

The separator 110 separately outputs the separated received signals at the even numbers of the time slots and the separated received signals at the odd numbers of the time slots to the complementary code estimating unit 134.

The multiplexer 102 outputs the complementary code (A, B) to the complementary code estimating unit 134 and the control unit 135.

The complementary code estimating unit 134 estimates the complementary code of the interference signal using the time width $L_u$ and complementary code (A, B) and outputs the estimation result to the control unit 135. The estimation of the complementary code will be described in detail below.

The control unit 135 gives the complementary code generator 101 an instruction to generate a complementary code different from the complementary code (A, B) and also different from the complementary code estimated by the complementary code estimating unit 134. In other words, the control unit 135 changes the probe signal generating code to a complementary code different from both of the complementary code (A, B) and the complementary code of the interference signal.

Estimation of Complementary Code of Interference signal

As for the complementary code, it is recognized that the time width $L_u$ of the interference signal has a length twice as long as a code length N of each code sequence forming the complementary code of the interference signal. In other words, the relationship of $N = L_u/2$ holds. Thus, the complementary code estimating unit 134 estimates the code length N of each code sequence of the interference signal from the time width $L_u$ of the interference signal. The complementary code estimating unit 134 demodulates the received signals, similarly to the demodulator 111, using a complementary code formed from a pair of code sequences each having the estimated code length N and different from the complementary code (A, B) to obtain a demodulated signal. The complementary code estimating unit 134 demodulates the received signals while sequentially changing the pair of code sequences under the condition of the estimated code length N. For example, the complementary code estimating unit 134 demodulates the received signals while sequentially changing $2^2$ code sequences per code sequence when the estimated code length N has a length of four. Then, the complementary code estimating unit 134 estimates a specific complementary code that generates a correlation peak in the demodulated signal as the complementary code of the interference signal. Note that storing a correlation pattern between the code used at the radar 1 and a code to be the interference signal in a memory or the like increases the estimating speed.

According to the fifth embodiment as described above, the complementary code estimating unit 134 estimates the complementary code of the interference signal. The control unit 135 changes the probe signal generating code of the radar apparatus 50 to a complementary code different from both of the complementary code (A, B) and the complementary code of the interference signal, or a complete complementary code for the complementary code of the interference signal. This can cause the probe signal generating code of the radar apparatus 50 to surely differ from the probe signal generating code of the source of the interference signal, and thus can surely avoid the interference.

Further, the complementary code estimating unit 134 demodulates the received signals using the time width of the interference signal identified by the interference identifying unit 122 and using a complementary code formed from a pair of code sequences each having a code length corresponding to the time width and different from the complementary code (A, B) to obtain a demodulated signal. Then, the complementary code estimating unit 134 estimates a specific complementary code that generates a correlation peak in the obtained demodulated signal as the complementary code of the interference signal. This can accurately estimate the complementary code of the interference signal.

[f] Sixth Embodiment

A sixth embodiment relates to the notification of a probe signal generating code.

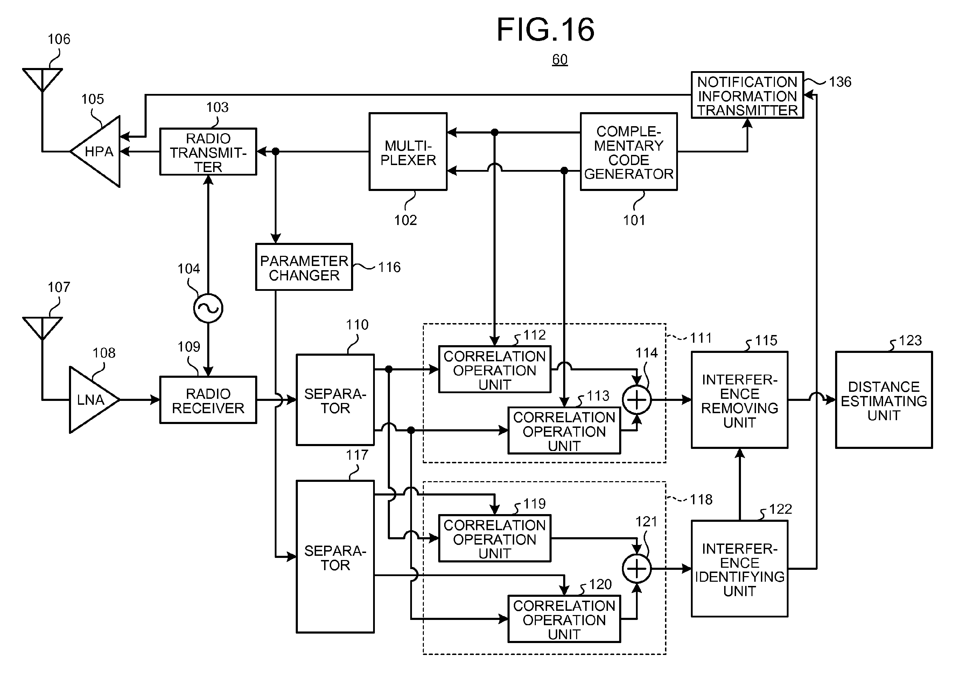

FIG. 16 is a functional block diagram for illustrating an example of the radar apparatus according to the sixth embodiment. In FIG. 16, a radar apparatus 60 further includes a notification information transmitter 136 in addition to the components in the first embodiment.

A complementary code generator 101 and an interference identifying unit 122 further perform the following processes in addition to the process in the first embodiment.

In other words, the complementary code generator 101 outputs the complementary code (A, B) to the notification information transmitter 136 when the complementary code (A, B) is used as the probe signal generating code.

The interference identifying unit 122 outputs a signal indicating whether the interference signal has been identified to the notification information transmitter 136.

The notification information transmitter 136 transmits notification information indicating that the probe signal generating code of the radar apparatus 60 is the complementary code (A, B) or, namely, the information for distinguishing the probe signal generating code through an HPA 105 and an antenna 106 when the interference signal has been identified. The notification information transmitter 136 simultaneously notifies the notification information, for example, using notification channels. Note that the notification information can be notified, for example, using an interval in which the complementary code is zero in the time slot.

The notification information is received by another radar apparatus that is a source of the interference signal. Thus, another radar apparatus that is a source of the interference signal can change the complementary code of the interference signal to a complementary code different from the probe signal generating code of the radar apparatus 60. This can prevent or restrain the occurrence of interference.

[g] Other Embodiments

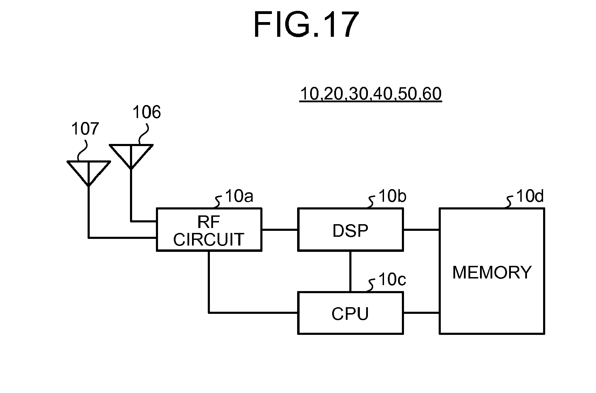

[1] The radar apparatuses 10, 20, 30, 40, 50, and 60 in the first to sixth embodiments can be implemented with the following hardware configuration. FIG. 17 is a view of an exemplary hardware configuration of the radar apparatuses. As illustrated in FIG. 17, the radar apparatuses 10, 20, 30, 40, 50, and 60 include the antennas 106 and 107, a radio frequency (RF) circuit 10a, a digital signal processor (DSP) 10b, a central processing unit (CPU) 10c, and a memory 10d as the components of the hardware configuration. RAM including SDRAM, ROM, flash memory or the like can be cited as an example of the memory 10d. The radio transmitter 103, the local signal generator 104, the HPA 105, the LNA 108, and the radio receiver 109 are implemented using the RF circuit 10a. The complementary code generator 101, the multiplexer 102, the separators 110 and 117, and the demodulators 111 and 118 are implemented using the DSP 10b. The parameter changer 116, the interference identifying unit 122, the interference removing unit 115, the distance estimating unit 123, the control units 131, 132, 133, and 135, and the complementary code estimating unit 134 are implemented using the CPU 10c. The notification information transmitter 136 is implemented using the CPU 10c and the RF circuit 10a.
[2] Each of the above-described processes can also be implemented by the execution of a previously prepared program by the CPU. For example, a program for each of the processes performed by the parameter changer 116, the interference identifying unit 122, the interference removing unit 115, the distance estimating unit 123, the control units 131, 132, 133, and 135, and the complementary code estimating unit 134 can previously be stored in the memory, so that each of the programs can be read to the CPU to function as a process. Further, it is not necessary to previously store each of the programs in the memory. In other words, each of the programs can previously be stored in a transportable recording medium capable of connecting to the radar apparatuses 10, 20, 30, 40, 50, and 60, for example, a flexible disk (FD), a CD-ROM, an MO disk, a DVD disk, a magneto optical disk, an IC card, and a memory card, so that each of the programs can be read to the CPU to function as a process. Further, each of the programs can previously be stored in a computer, a server, or the like connected to the radar apparatuses 10, 20, 30, 40, 50, and 60 by wireless or by wire, for example, through the Internet, a LAN, or a WAN, so that each of the programs can be read to the CPU in order to function as a process.
[3] The multiplexer 102 time-multiplexes the pair of code sequences of the complementary code in the above-mentioned description. However, the method for multiplexing the pair of code sequences is not limited to the time-multiplexing. The multiplexer 102 can also frequency-multiplexes or code-multiplexes the pair of code sequences.
[4] The second to sixth embodiments can be implemented as being combined not only with the first embodiment but also with each other.
[5] A radar apparatus has been described as an example of the detecting and ranging apparatus disclosed by the present application in each of the first to sixth embodiments. However, the detecting and ranging apparatus is not limited to the radar apparatus. For example, the detecting and ranging apparatus can be a sonar device. When the detecting and ranging apparatus is implemented as a sonar device, the antenna of the radar apparatus can be replaced by a sound pressure sensor configured to transmit and receive sound waves and the radio frequency oscillator of the radar apparatus can be replaced by a sonar oscillator.

According to the disclosed aspects, an interference signal included in the received signals can be identified with a detecting and ranging apparatus using a complementary code.

**Claims**

**1.** A detecting and ranging apparatus (10, 20, 30, 40, 50, 60) comprising:

a transmitter (103) that transmits, to a detection region, a probe signal generated using a first complementary code formed from a first pair of code sequences as a probe signal generating code;
a first demodulator (111) that demodulates a received signal using the first complementary code to obtain a first demodulated signal;
a second demodulator (118) that demodulates the received signal using a second complementary code formed from a second pair of code sequences, in which an order, polarity or phase or any combination thereof of the first pair of code sequences is changed, to obtain a second demodulated signal; and
an identifying unit (122) that identifies an interference signal included in the received signals using the second demodulated signal.

**2.** The detecting and ranging apparatus (20) according to claim 1, further comprising a control unit (131) that changes a transmit frequency, phase, bandwidth or transmission power or any combination thereof of the probe signal when the identifying unit (122) identifies the interference signal or when it is difficult to identify the interference signal.

**3.** The detecting and ranging apparatus (30) according to claim 1 or 2, further comprising a control unit (132) that changes the probe signal generating code to a complementary code different from the first complementary code when the identifying unit (122) identifies the interference signal.

**4.** The detecting and ranging apparatus (30) according to claim 3,
wherein the control unit (132) changes the probe signal generating code to the second complementary code.

**5.** The detecting and ranging apparatus (30) according to claim 3,
wherein the control unit (132) changes the probe signal generating code to a complete complementary code for the first complementary code or to a complete complementary code for a complementary code of the interference signal.

**6.** The detecting and ranging apparatus (40) according to any one of claims 1 to 5,
wherein the second demodulator (118) demodulates the received signal using the second complementary code only when a correlation peak that has not existed in the past appears in the first demodulated signal.

**7.** The detecting and ranging apparatus (50) according to any one of claims 1 to 6, further comprising an estimating unit (134) that estimates a third complementary code used for generating the interference signal,
wherein the control unit (135) changes the probe signal generating code to a complementary code different from both of the first complementary code and the third complementary code or to a complete complementary code for a complementary code of the interference signal.

**8.** The detecting and ranging apparatus (50) according to claim 7,
wherein the estimating unit (134)
uses a time width of the interference signal identified by the identifying unit (122),
demodulates the received signals using a complementary code formed from a pair of code sequences each having a code length corresponding to the time width and different from the first complementary code to obtain a third demodulated signal, and
estimates a specific complementary code that generates a correlation peak in the third demodulated signal as the third complementary code.

**9.** The detecting and ranging apparatus (60) according to any one of claims 1 to 8,
wherein the transmitter (136) notifies information for distinguishing the probe signal generating code when the identifying unit (122) identifies the interference signal.

**10.** A method for identifying an interference signal comprising:

transmitting, to a detection region, a probe signal generated using a first complementary code formed from a first pair of code sequences;
demodulating a received signal using the first complementary code to obtain a first demodulated signal, whereas demodulating the received signal using a second complementary code formed from a second pair of code sequences, in which an order, polarity or phase or any combination thereof of the first pair of code sequences is changed, to obtain a second demodulated signal; and
identifying an interference signal included in the received signals using the second demodulated signal.

# FIG.1

# FIG.2

DESIRED SIGNAL v$^D$
INTERFERENCE SIGNAL v$^U$

FIG.3

# FIG.4

# FIG.5

EP 2 735 885 A1

# FIG.6

# FIG.7

# FIG.8

# FIG.9

<u>20</u>

EP 2 735 885 A1

# FIG.10

EP 2 735 885 A1

# FIG.11

# FIG.12

40

# FIG.13

COMPLEMENTARY CODE (A, B) — S301

k=k+1 — S302

STORE s(k) — S303

S304 s(k)=s(k-1)? — YES

NO

COMPLEMENTARY CODE (B, -A) — S305

S306 HAS INTERFERENCE SIGNAL BEEN IDENTIFIED? — NO

YES — S307
CHANGE COMPLEMENTARY CODE

S308
CHANGE PARAMETER OF PROBE SIGNAL

# FIG.14

DESIRED SIGNAL $v^D$ + INTERFERENCE SIGNAL $v^U$

[dB]

CORRELATION LEVEL

DELAY INDEX

# FIG.15

50

EP 2 735 885 A1

# FIG.16

<u>60</u>

EP 2 735 885 A1

# FIG.17

10,20,30,40,50,60

| | Europäisches Patentamt European Patent Office Office européen des brevets | **EUROPEAN SEARCH REPORT** | **Application Number** EP 13 18 5761 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 5 440 311 A (GALLAGHER JOHN J [US] ET AL) 8 August 1995 (1995-08-08)<br>* abstract *<br>* column 4, line 47 - line 62 *<br>* column 11, line 53 - column 12, line 5 *<br>* column 12, line 56 - line 59 *<br>----- | 1-10 | INV.<br>G01S13/34<br>G01S7/35<br>G01S13/32<br>G01S13/28<br>G01S7/292 |
| Y | US 5 151 702 A (URKOWITZ HARRY [US])<br>29 September 1992 (1992-09-29)<br>* abstract *<br>----- | 1-10 | |
| Y | US 2003/151542 A1 (STEINLECHNER SIEGBERT [DE] ET AL) 14 August 2003 (2003-08-14)<br>* abstract *<br>* paragraphs [0008], [0015], [0102] *<br>----- | 1-10 | |
| | | | TECHNICAL FIELDS SEARCHED (IPC)<br><br>G01S |

The present search report has been drawn up for all claims

| Place of search | Date of completion of the search | Examiner |
|---|---|---|
| The Hague | 24 February 2014 | Alberga, Vito |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**ANNEX TO THE EUROPEAN SEARCH REPORT
ON EUROPEAN PATENT APPLICATION NO.**

EP 13 18 5761

This annex lists the patent family members relating to the patent documents cited in the above-mentioned European search report.
The members are as contained in the European Patent Office EDP file on
The European Patent Office is in no way liable for these particulars which are merely given for the purpose of information.

24-02-2014

| Patent document cited in search report | | Publication date | Patent family member(s) | | Publication date |
|---|---|---|---|---|---|
| US 5440311 | A | 08-08-1995 | NONE | | |
| US 5151702 | A | 29-09-1992 | CA | 2072287 A1 | 23-01-1993 |
| | | | US | 5151702 A | 29-09-1992 |
| US 2003151542 | A1 | 14-08-2003 | DE | 10104022 A1 | 01-08-2002 |
| | | | EP | 1358506 A1 | 05-11-2003 |
| | | | JP | 2004518141 A | 17-06-2004 |
| | | | US | 2003151542 A1 | 14-08-2003 |
| | | | WO | 02061454 A1 | 08-08-2002 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008020221 A
- JP 6160519 A
- JP 2000321351 A
- JP 2000009833 A
- JP 2002014159 A